# EUROPÄISCHE PATENTSCHRIFT

(11) **EP 3 662 985 B1**
(45) Veröffentlichungstag und Bekanntmachung des Hinweises auf die Patenterteilung: **18.05.2022**
(21) Anmeldenummer: 18000949.0
(22) Anmeldetag: 07.12.2018
(51) Int. Cl.: B01D 46/00, B01D 41/04, B01D 46/04

(54) **REINIGUNGSVORRICHTUNG FÜR SCHLAUCHFILTER**
CLEANING DEVICE FOR BAG FILTER
DISPOSITIF DE NETTOYAGE POUR FILTRE À MANCHES

(43) Veröffentlichungstag der Anmeldung: 10.06.2020
(60) Teilanmeldung: 20000066.9
(73) Patentinhaber: Reining, Christian, 48167 Münster (DE)
(72) Erfinder: Reining, Christian, 48167 Münster (DE)
(74) Vertreter: Kayser, Christoph

(56) Entgegenhaltungen:
- EP-A1- 1 543 872
- WO-A1-2010/119899
- WO-A1-2016/006742
- DE-U1-202013 009 510
- JP-A- 2001 259 557

## Beschreibung

Die vorliegende Erfindung betrifft eine Reinigungsvorrichtung für in einem Filterboden hängende Schlauchfilter, mit einem Reinigungskopf, der an einem Ende über einen Druckmittelschlauch mit einer Druckmittelquelle verbunden ist und eine Reinigungsbohrung aufweist, die um eine Hauptachse des Reinigungskopfes herum in Drehung versetzt werden kann und durch die Druckmittel austritt, wobei in dem Reinigungskopf eine Antriebseinrichtung angeordnet ist, welche die Reinigungsbohrung in Drehung versetzt, und mit einer Steuereinrichtung zur Steuerung von Betriebsparametern und der Antriebseinrichtung.

Eine solche Reinigungsvorrichtung ist aus WO 2010/119899 A1 bekannt. In diesem Stand der Technik ist beschrieben, dass eine motorische Antriebseinrichtung in oder an einem Reinigungskopf angebracht ist und sich während eines Reinigungsvorgangs innerhalb eines zu reinigenden Objekts befindet. Der Reinigungskopf weist ein erstes Ende auf, das mit einem Druckmittelrohr verbunden ist und weist ein entgegengesetztes, zweites oder freies Ende auf, das eine Stirnseite des Reinigungskopfes bildet. Die Antriebseinrichtung ist in einem Gehäuse einer Reinigungseinrichtung in der Nähe des ersten Endes des Reinigungskopfes angeordnet. Das Gehäuse weist unmittelbar vor dem Reinigungskopf ein Lager auf, das einen Durchgang der Antriebswelle zulässt. Auch wenn sich in dem Schlauchfilter die Reingasseite befindet und der größte Teil der Verschmutzung am Schlauchfilter außen anhaftet, tritt bei der intensiven Abreinigung mittels Druckbeaufschlagung von innen immer auch ein Staubanteil durch den Filter in das Innere des Schlauchfilters und wird dort nach oben abgesaugt. Der bei einer Reinigung auch im Inneren eines Schlauchfilters anfallende Staub wird an einen Eingang des Schlauchfilters, also stromaufwärts über einen Auslass nach außen abgeführt. Der von der Reinigungseinrichtung erzeugte Staub wird somit in unmittelbarer Nähe des Lagers erzeugt und bei seinem Transport nach oben an dem Gehäuse vorbeigeführt. Die am ersten Ende des Reinigungskopfes liegende Antriebseinrichtung ist während eines Reinigungsvorgangs daher einer im Einzelfall nicht unerheblichen Staubbelastung ausgesetzt. Dies wiederum führt dazu, dass Staub in das Gehäuse eindringt und die Funktion der Antriebseinrichtung und der in dem Gehäuse zudem angeordneten Bauelemente beeinträchtigt oder versagen lässt.

Reinigungsvorrichtungen ohne Antriebseinrichtung sind zum Beispiel aus EP 1 543 872 A1, EP 1 932 577 A1 oder EP 2 409 788 A2 bekannt.

Die in dem vorgenannten Stand der Technik offenbarten Reinigungsvorrichtungen werden eingesetzt, um Schlauchfilter zu reinigen. Die Rohseite eines solchen mit den Reinigungsvorrichtungen des Standes der Technik zu reinigenden Schlauchfilters liegt außen und die Reinseite im Inneren des Schlauchfilters. Es strömt also die verunreinigte Luft von außen durch das Filtermaterial des Schlauchfilters nach innen und wird dort abgeführt. Beim Durchströmen des Schlauchfilters bleiben die Verunreinigungen der Luft in dem Filtermaterial hängen, so dass die Luft im Inneren des Schlauchfilters gereinigt ist. Mit der Zeit setzt sich die Außenseite solcher Schlauchfilter demnach mit den Verunreinigungen zu. Das bedeutet, dass sich das Filtergut überwiegend auf der Außenseite ablagert und zunehmend die Durchlässigkeit des Filtermaterials vermindert.

Durch das Zusetzen von Schlauchfiltern über die Betriebszeit verringert sich deren Filterleistung. Es ist daher in vorbestimmten zeitlichen Abständen erforderlich, solche Schlauchfilter zu reinigen, um stets eine gute Filterleistung sicherzustellen.

Zu diesem Zweck wird in vorbestimmten zeitlichen Abständen entweder im laufenden Betrieb der Filteranlage oder aber während eines Stillstands ein Reinigungskopf in das Innere des Schlauchfilters, also auf der Reinseite, eingeführt. Der Reinigungskopf ist über einen Druckmittelschlauch mit einer Druckmittelquelle verbunden, die sich irgendwo außerhalb befindet. Die Schlauchfilter hängen mit einem offenen Ende in einer Öffnung eines Filterbodens, auf dem zum Beispiel die Druckmittelquelle platziert werden kann. Die Druckmittelquelle weist eine Steuereinrichtung auf, mit deren Hilfe der Druck des Druckmittels einstellbar ist. Der Reinigungskopf weist wiederum wenigstens eine radiale Bohrung auf, aus der das Druckmittel in radialer Richtung aus dem Reinigungskopf austreten kann und gegebenenfalls auf die Innenseite des Schlauchfilters auftrifft. Bei nicht-rotierenden Reinigungsköpfen bildet die Reinigungsbohrung zum Beispiel eine Ringdüse, so dass ein umfänglicher Reinigungsstrahl austreten kann, der sich bei einer Bewegung des Reinigungskopfes entlang der Längsachse des Schlauchfilters dazu führt, dass sich das Filtermaterial des Schlauchfilters in Bewegungsrichtung wellenartig nach außen wölbt. Dadurch fällt das Filtergut von der Außenseite des Schlauchfilters ab.

Die Aufgabe der vorliegenden Erfindung ist daher, eine Reinigungsvorrichtung der eingangs genannten Art derart weiterzubilden, dass diese in einem großen Anwendungsbereich stets optimal gesteuert werden kann.

Die Aufgabe wird erfindungsgemäß dadurch gelöst, dass die Antriebseinrichtung in einem Raum angeordnet ist, der ein freies Ende des mit dem Druckmittelschlauch verbundenen und in den hängenden Schlauchfilter eingeführten Reinigungskopfes bildet und durch eine Endkappe umschlossen ist.

Ein weiterer Vorteil der vorliegenden Erfindung ist es, dass der Reinigungskopf einen Rotor aufweist, in dem die Reinigungsbohrung ausgebildet ist. Durch diese Maßnahme ist sichergestellt, dass sich nicht der gesamte Reinigungskopf drehen muss, sondern nur ein Bauteil desselben. Es ist daher möglich, den Rotor nach außen abzudecken und dadurch zu verhindern, dass drehende Teile mit einem sich zwischen dem Reinigungskopf und dem Filtermaterial angeordneten Stützkorb kollidieren.

Ein weiterer Vorteil der vorliegenden Erfindung ist, dass der Druckmittelchlauch an einem dem Reinigungskopf entgegengesetzten Ende an ein Druckrohr gekuppelt ist. Die Anordnung eines Druckrohrs zwischen dem Druckmittelschlauch und der Druckmittelquelle ermöglicht, in einfacher Weise, mechanische Bauteile und Steuerelemente mit dem Druckmittelschlauch zu verbinden.

Weitere Vorteile der vorliegenden Erfindung ergeben sich aus den weiteren Merkmalen der weiteren Unteransprüche.

Eine Ausführungsform der vorliegenden Erfindung wird im Folgenden näher dargestellt. Zum Verständnis der gesamten Funktionsweise wird auch eine nicht zur vorliegenden Erfindung gehörende Ausführungsform beschrieben. Es zeigen:
Fig. 1 eine schematische Darstellung einer nicht zur vorliegenden Erfindung gehörenden Ausführungsform einer Reinigungsvorrichtung;
Fig. 2 eine schematische Darstellung der nicht zur vorliegenden Erfindung gehörenden Ausführungsform eines Reinigungskopfes und eines daran ansetzenden Druckmittelschlauchs der Reinigungsvorrichtung aus Fig.1; und
Fig. 3 eine schematische Darstellung eines Reinigungskopfes und eines daran ansetzenden Druckmittelschlauchs als Teil der erfindungsgemäßen Reinigungsvorrichtung.

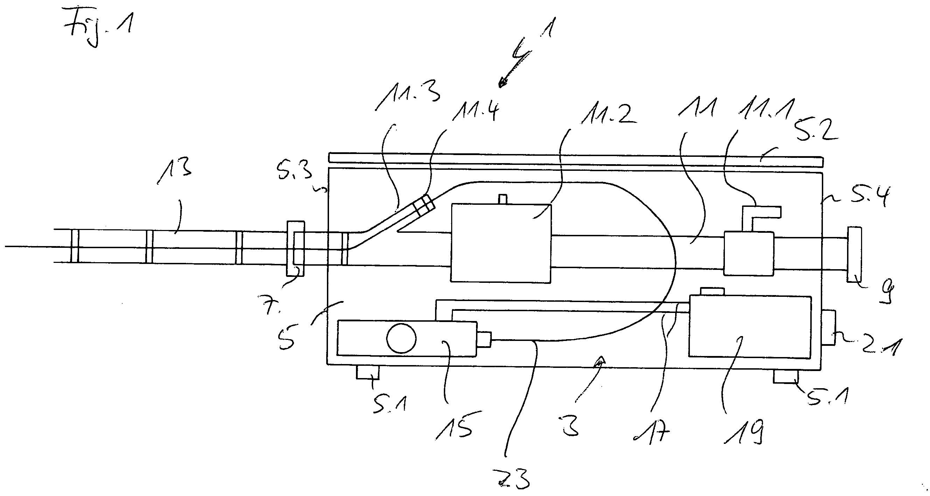

In Fig. 1 ist schematisch ein Teil einer Reinigungsvorrichtung 1 in einer nicht zur vorliegenden Erfindung gehörenden Ausführungsform dargestellt. Das Teil wird als Steuerkiste 3 bezeichnet und ist außerhalb eines zu reinigenden Filterschlauchs (nicht dargestellt) positioniert. Zu diesem Zweck weist die Steuerkiste 3 ein Gehäuse 5 auf, das hier nur schematisch als rechteckige Linie dargestellt ist. An dem Gehäuse 5 sind bodenseitig Füße 5.1 und deckenseitig ein Deckel 5.2 vorgesehen. An einer ersten Seitenwand 5.3 weist das Gehäuse 5 einen ersten Kupplungsanschluss 7 auf. An einer zweiten Seitenwand 5.4 weist das Gehäuse 5 einen zweiten Kupplungsanschluss 9 auf. Im Inneren des Gehäuses 5 befindet sich ein Druckrohr 11, das sich von dem Kupplungsanschluss 7 zum zweiten Kupplungsanschluss 9 erstreckt und im Wesentlichen krümmungsfrei verläuft. Der zweite Kupplungsanschluss 9 dient als Anschluss an eine Druckmittelquelle (nicht dargestellt) und der erste Kupplungsanschluss 7 dient zum Anschluss eines Druckmittelschlauchs 13. Als Druckmittelquelle kann zum Beispiel ein Kompressor dienen. In diesem Fall ist das Druckmittel Umgebungsluft. In anderen Ausführungsformen können aber auch andere zur Reinigung geeignete Gase, z.B. Inertgase, verwendet werden.

An dem Druckmittelrohr 11 ist in der Nähe des zweiten Kupplungsanschlusses 9 ein Absperrhahn 11.1 angeordnet. Mit diesem Absperrhahn 11.1 kann ein von der Druckmittelquelle über den zweiten Druckmittelanschluss 9 strömendes Druckmittel abgesperrt werden. Stromabwärts in Richtung des ersten Kupplungsanschlusses 7 ist an dem Druckmittelrohr 11 ein Steuerventil 11.2 angeordnet, das öffnen und schließen kann. Zwischen dem Steuerventil 11.2 und dem ersten Kupplungsanschluss 7 ist ein Rohransatz 11.3 vorgesehen, der an einem freien Ende ein Dichtungselement 11.4 aufweist, das ein Simmerring sein kann.

Unterhalb des Druckmittelrohrs 11 ist in der Steuerkiste 3 eine Antriebseinrichtung 15 angeordnet. Bei der Antriebseinrichtung 15 handelt es sich in der dargestellten Ausführungsform um einen Elektromotor. Der Elektromotor ist über eine elektrische Verbindung 17 mit einer Steuereinrichtung 19 verbunden. Die Steuereinrichtung 19 ist eine Steuerbox mit Display (nicht dargestellt), mit der Betriebsparameter der Antriebseinrichtung 15, zum Beispiel Drehzahlen, eingestellt werden können. Die Steuereinrichtung 19 kann auch mit dem Steuerventil 11.2 verbunden sein, um auch die Betriebsparameter des Druckmittels einstellen zu können. In anderen Ausführungsformen können auch unabhängige Steuereinrichtungen für Druckmittel und Antrieb vorgesehen sein. Die Steuereinrichtung 19 ist wiederum über einen Spannungsversorgungsanschluss 21 mit einer Spannungsquelle, zum Beispiel Netzspannung, verbunden.

Die Antriebseinrichtung 15 treibt eine Antriebswelle 23 an, die eine flexible Antriebswelle ist und über die Dichtungseinrichtung 11.4 und den Rohransatz 11.3 in den Druckmittelschlauch 13 eingeführt ist. Der Rohransatz 11.3 bzw. die Dichtungseinrichtung 11.4 dienen als Lager für die flexible Antriebswelle 23.

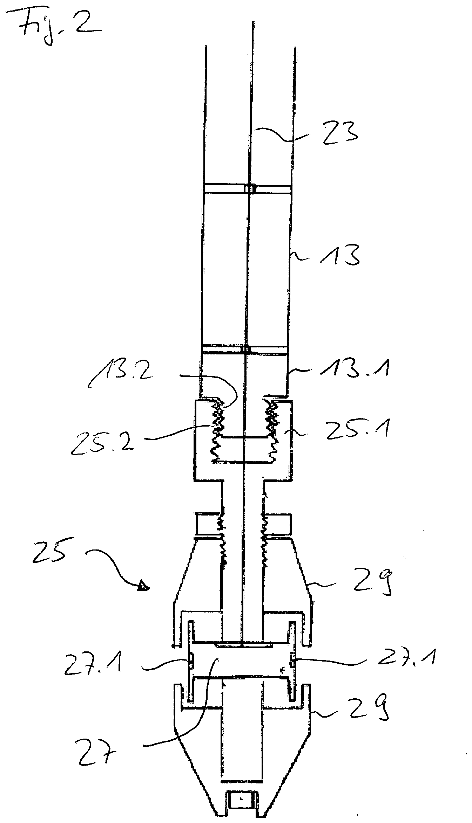

Der Druckmittelschlauch 13 ist ein flexibler Schlauch, der üblicherweise für die Leitung von Druckmittel, z.B. Druckluft, verwendet wird. Der Druckmittelschlauch 13 ist an einem entgegengesetzten Ende 13.1 mit einem Reinigungskopf 25 verbunden. Dies ist in Fig. 2 schematisch dargestellt. Die Länge des Druckmittelschlauchs 13 ist abhängig von der Länge eines zu reinigenden Schlauchfilters.

Das Ende 13.1 des Druckmittelschlauchs 13 weist ein Außengewinde 13.2 auf, das mit einem Innengewinde 25.2 eines Deckels 25.1 kämmt. Auf diese Weise kann der Reinigungskopf 25 auf das Ende 13.1 des Druckmittelschlauchs 13 geschraubt werden. Die Schraubverbindung ist fest aber lösbar und gut geeignet für eine betriebssichere Verbindung.

In dem Reinigungskopf 25 ist ein Rotor 27 ausgebildet, der wenigstens eine Reinigungsbohrung 27.1 aufweist, die im Wesentlichen radial ausgerichtet ist und einen Reinigungsstrahl des Druckmittels in Richtung einer Innenwand des Schlauchfilters lenkt. Die Antriebswelle 23 ist mit dem Rotor 27 verbunden und treibt den Rotor 27 und somit die Reinigungsbohrung 27.1 zu einer Drehbewegung an, wenn die Antriebseinrichtung 15 eingeschaltet ist. Der Rotor 27 ist nach außen von einem Mantel 29 des Reinigungskopfes 25 weitestgehend abgedeckt, so dass die drehenden Bauteile des Reinigungskopfes 25 nicht freiliegen. Dadurch wird ein Berührungskontakt zwischen Rotor 27 und einem im Schlauchfilter zum Aufspannen des Schlauchfilters angeordneten Stützkorb verhindert. In der dargestellten Ausführungsform ist im Mantel 29 eine Ausnehmung 30 ausgebildet, die mit der Reinigungsbohrung 27.1 fluchtet, wenn beide gleichgerichtet sind. Dadurch können bei kontinuierlichem Druckmittelstrom Impulse erzeugt werden, welche die Reinigungswirkung noch verbessern.

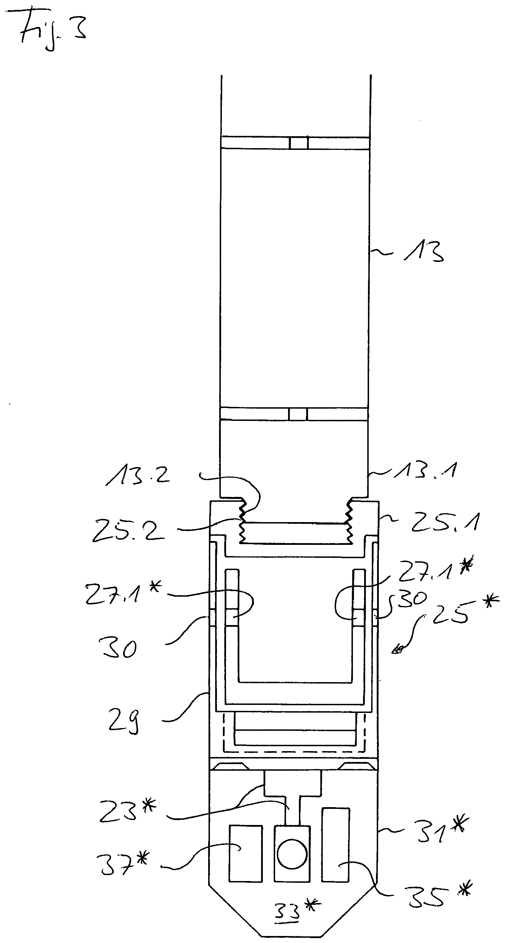

In Fig. 3 ist die erfindungsgemäße Ausführungsform der erfindungsgemäßen Reinigungsvorrichtung 1 dargestellt. Der Unterschied zu der in Fig 1 und Fig. 2 beschriebenen nicht zu der Erfindung gehörenden Ausführungsform liegt im Wesentlichen nur in der Anordnung der Antriebseinrichtung. Aus diesem Grunde werden die für die erfindungsgemäße Ausführungsform relevanten Bauteile mit den gleichen Bezugszeichen versehen, die lediglich zusätzlich ein "^{∗}" aufweisen. Bauteile, die in der erfindungsgemäßen Ausführungsform und in der in den Figuren 1 und 2 beschriebenen Ausführungsform Verwendung finden und identisch sind behalten das in Fig. 1 und Fig. 2 verwendete Bezugszeichen. Der Reinigungskopf 25 ^{∗} ist in den nicht beschriebenen Bauteilen und Konstruktionen identisch mit dem Reinigungskopf 25 .

In Fig. 3 ist die Antriebseinrichtung 15^{∗} im Reinigungskopf 25 ^{∗} angeordnet. Diese ersetzt dort die Antriebseinrichtung 15 in der Steuerkiste 3. Das Druckmittelrohr 11 muss dann in der erfindungsgemäßen Ausführungsform auch keinen Rohransatz 11.3 mit der Dichtungseinrichtung 11.4 aufweisen, zumindest ist dieser dann durch einen Verschluss (nicht dargestellt) dicht verschlossen. In der erfindungsgemäßen Ausführungsform ist die Antriebseinrichtung 15^{∗} im Reinigungskopf 25 ^{∗} integriert.

Der Reinigungskopf 25 ^{∗} in Fig. 3 weist unterhalb des Rotors 27^{∗} in einem durch eine Endkappe 31^{∗} umschlossenen Raum 33^{∗} die Antriebseinrichtung 15^{∗} auf, die über die Antriebswelle 23 ^{∗} mit dem Rotor 27^{∗} verbunden ist. Die Antriebswelle 23 ^{∗} muss in der erfindungsgemäßen Ausführungsform nicht, wie in der in Fig. 2 und Fig. 3 beschriebenen und nicht zur Erfindung gehörenden Ausführungsform, flexibel ausgebildet sein, sondern kann auch starr sein. Als Spannungsquelle 35^{∗} dient hier ein Akkumulator. In dem Raum 33^{∗} ist ein Regler 37^{∗} angeordnet, mit dem die Antriebseinrichtung 15^{∗} gesteuert werden kann. Auch die Antriebseinrichtung 15^{∗} ist ein Elektromotor. Der Regler 37^{∗} ist über eine Funkverbindung mit der Steuereinrichtung 19 verbunden, so dass die Antriebseinrichtung 15^{∗} von außen bedient werden kann. Alternativ sind auch kabelgebundene Verbindungen zwischen dem Regler 37^{∗} und der Antriebseinrichtung 15^{∗} einsetzbar.

### Bezugszeichenliste

- 1: Reinigungsvorrichtung
- 3: Steuerkiste
- 5: Gehäuse
- 5.1: Füße
- 5.2: Deckel
- 5.3: erste Seitenwand
- 5.4: zweite Seitenwand
- 7: erster Kupplungsanschluss
- 9: zweiter Kupplungsanschluss
- 11: Druckmittelrohr
- 11.1: Absperrhahn
- 11.2: Steuerventil
- 11.3: Rohransatz
- 11.4: Dichtungselement
- 13: Druckmittelschlauch
- 13.1: Ende des Druckmittelschlauchs
- 13.2: Außengewinde
- 15: Antriebseinrichtung
- 15^{∗}: Antriebseinrichtung
- 17: elektrische Verbindung
- 19: Steuereinrichtung
- 21: Spannungsversorgungsanschluss
- 23: flexible Antriebswelle
- 23^{∗}: Antriebswelle
- 25: Reinigungskopf
- 25^{∗}: Reinigungskopf
- 25.1: Deckel
- 25.2: Innengewinde
- 27: Rotor
- 27^{∗}: Rotor
- 27.1: Reinigungsbohrung
- 27.1^{∗}: Reinigungsbohrung
- 29: Mantel
- 30: Ausnehmung
- 31^{∗}: Endkappe
- 33^{∗}: Raum
- 35^{∗}: Spannungsquelle
- 37^{∗}: Regler

## Patentansprüche

1. Reinigungsvorrichtung für in einem Filterboden hängende Schlauchfilter, mit einem Reinigungskopf (25^{∗}), der an einem Ende über einen Druckmittelschlauch (13) mit einer Druckmittelquelle verbunden ist und eine Reinigungsbohrung (27.1^{∗}) aufweist, die um eine Hauptachse des Reinigungskopfes (25^{∗}) herum in Drehung versetzt werden kann und durch die Druckmittel austritt, wobei in dem Reinigungskopf (25^{∗}) eine Antriebseinrichtung (15^{∗}) angeordnet ist welche die Reinigungsbohrung (27.2^{∗}) in Drehung versetzt, und mit einer Steuereinrichtung (19) zum Steuern von Betriebsparametern und der Antriebseinrichtung (15^{∗})
**dadurch gekennzeichnet,**
**dass** die Antriebseinrichtung (15^{∗}) in einem Raum (33^{∗}) angeordnet ist, der ein freies Ende des mit dem Druckmittelschlauch (13) verbundenen und in den hängenden Schlauchfilter eingeführten Reinigungskopfes (25^{∗}) bildet und durch eine Endkappe (31^{∗}) umschlossen ist.

2. Reinigungsvorrichtung nach Anspruch 1,
**dadurch gekennzeichnet,**
**dass** der Reinigungskopf (25^{∗}) einen Rotor (27^{∗}) aufweist, in dem die Reinigungsbohrung (27.1^{∗}) ausgebildet ist.

3. Reinigungsvorrichtung nach Anspruch 2,
**dadurch gekennzeichnet,**
**dass** der Druckmittelchlauch (13) an einem dem Reinigungskopf (25^{∗}) entgegengesetzten Ende an ein Druckrohr (11) gekuppelt ist.

4. Reinigungsvorrichtung nach Anspruch 3,
**dadurch gekennzeichnet,**
**dass** in dem Raum (33^{∗}) ein Regler (37^{∗}) angeordnet ist.

5. Reinigungsvorrichtung nach Anspruch 4,
**dadurch gekennzeichnet,**
**dass** der Regler (37^{∗}) über eine Funkverbindung mit der Steuereinrichtung (19) verbunden ist.

6. Reinigungsvorrichtung nach Anspruch 4 oder 5,
**dadurch gekennzeichnet,**
**dass** der Regler (37^{∗}) mit einer Spannungsversorgung verbunden ist

7. Reinigungsvorrichtung nach Anspruch 6,
dass die Spannungsversorgung einen Akkumulator als Spannungsquelle (35^{∗}) umfasst.

8. Reinigungsvorrichtung nach einem der Ansprüche 3 bis 7,
**dadurch gekennzeichnet,**
**dass** das Druckrohr (11) ein Steuerventil (11.2) aufweist.

## Claims

1. A cleaning device for bag filters hanging in a filter bottom, comprising a cleaning head (25*) that is connected to a pressure medium source via a pressure medium hose (13) on one end and has a cleaning bore (27.1*), which can be set in rotation about a principal axis of the cleaning head (25*) and through which the pressure medium exits, wherein a drive unit (15*) is arranged in the cleaning head (25*) and sets the cleaning bore (27.2*) in rotation, and comprising a control unit (19) for controlling operating parameters and the drive unit (15*),
**characterized in**
**that** the drive unit (15*) is arranged in a space (33*), which forms a free end of the cleaning head (25*) that is connected to the pressure medium hose (13) and inserted into the hanging bag filter, wherein said space is enclosed by an end cap (31*).

2. The cleaning device according to claim 1,
**characterized in**
**that** the cleaning head (25*) has a rotor (27*), in which the cleaning bore (27.1*) is formed.

3. The cleaning device according to claim 2,
**characterized in**
**that** the pressure medium hose (13) is coupled to a pressure pipe (11) on an end lying opposite of the cleaning head (25*).

4. The cleaning device according to claim 3,
**characterized in**
**that** a regulator (37*) is arranged in the space (33*).

5. The cleaning device according to claim 4,
**characterized in**
**that** the regulator (37*) is connected to the control unit (19) via radio communication.

6. The cleaning device according to claim 4 or 5,
**characterized in**
**that** the regulator (37*) is connected to a power supply.

7. The cleaning device according to claim 6,
**characterized in**
**that** the power supply comprises a power source (35*) in the form of an accumulator.

8. The cleaning device according to one of claims 3 to 7,
**characterized in**
**that** the pressure pipe (11) has a control valve (11.2).

## Revendications

1. Dispositif de nettoyage pour un filtre à manche suspendu dans un fond à filtre, avec une tête de nettoyage (25*), qui est reliée à une extrémité par un tuyau de moyen de pression (13) avec une source de moyen de pression et comporte un orifice de nettoyage (27.1*), qui peut être déporté en rotation autour d'un axe principal de la tête de nettoyage (25*) et à travers lequel sort un moyen de pression, sachant qu'un système d'entraînement (15*) est disposé dans la tête de nettoyage (25*), lequel déporte en rotation l'orifice de nettoyage (27.2*) et avec un dispositif de contrôle (19) pour piloter des paramètres de fonctionnement et le système d'entraînement (15*),
**caractérisé en ce que**
le système d'entraînement (15*) est disposé dans un compartiment (33*), qui forme une extrémité libre de la tête de nettoyage (25*) reliée au tuyau de moyen de pression (13) et introduite dans le filtre à manche suspendu et est fermée entourée par un capuchon (31*).

2. Dispositif de nettoyage selon la revendication 1,
**caractérisé en ce que**
la tête de nettoyage (25*) comporte un rotor (27*) dans lequel est constitué l'orifice de nettoyage (27.1*)

3. Dispositif de nettoyage selon la revendication 2,
**caractérisé en ce que**
le tuyau de moyen de pression (13) est couplé sur une extrémité opposée à la tête de nettoyage (25*) à un tuyau sous pression (11).

4. Dispositif de nettoyage selon la revendication 3,
**caractérisé en ce qu'**
un régulateur (37*) est disposé dans le compartiment (33*).

5. Dispositif de nettoyage selon la revendication 4,
**caractérisé en ce que**
le régulateur (37*) est relié au système de contrôle (19) par le biais d'une liaison radio.

6. Dispositif de nettoyage selon la revendication 4 ou 5,
**caractérisé en ce que**
le régulateur (37*) est relié à une alimentation de tension.

7. Dispositif de nettoyage selon la revendication 6,
**caractérisé en ce que**
l'alimentation de tension comprend un accumulateur sous la forme de source de tension (35*).

8. Dispositif de nettoyage selon l'une quelconque des revendications 3 à 7,
**caractérisé en ce que**
le tuyau sous pression (11) comporte une soupape de contrôle (11.2).
